# EUROPEAN PATENT SPECIFICATION

(11) **EP 4 550 077 B1**
(45) Date of publication and mention of the grant of the patent: **06.05.2026**
(21) Application number: 23207053.2
(22) Date of filing: 31.10.2023
(51) Int. Cl.: G05D 23/02, G05D 23/00, G05D 23/19

(54) **A CONTROL DEVICE FOR ATTACHING TO A VALVE ARRANGEMENT**
STEUERVORRICHTUNG ZUR BEFESTIGUNG AN EINER VENTILANORDNUNG
DISPOSITIF DE COMMANDE À FIXER À UN AGENCEMENT DE SOUPAPE

(43) Date of publication of application: 07.05.2025
(73) Proprietor: IMI Hydronic Engineering International SA, 1262 Eysins (CH)
(72) Inventor: ROHWETTER, Christoph, 59505 Bad Sassendorf (DE); ASCHENBRENNER, Wilhelm, 59609 Anröchte (DE)
(74) Representative: Zacco Sweden AB

(56) References cited:
- US-A1- 2012 247 582
- US-A1- 2018 259 198

## Description

### TECHNICAL FIELD

The present disclosure relates to a control device for attaching to a valve arrangement, a valve assembly comprising the control device and the valve arrangement, and a fluid distribution system comprising the valve assembly.

### BACKGROUND

A thermostatic radiator valve assembly provides a self-regulating control of fluid flow to a radiator. The thermostatic radiator valve assembly allows the temperature of a room to be controlled by changing the flow of hot water to the radiator. The thermostatic radiator valve assembly comprises a radiator valve arrangement and a control device attached to the radiator valve arrangement. The control device may also be called a thermostatic head. The radiator valve arrangement is provided with a valve comprising a valve spindle that controls an opening degree of the valve, where the opening degree of the valve controls the fluid flow through the valve arrangement. The control device is attached to the radiator valve arrangement such that the valve spindle of the radiator valve arrangement is actuable by the control device.

The control device comprises a thermal actuator configured to actuate the valve spindle in dependency of an ambient temperature around the control device. The thermal actuator comprises an actuator body, an expandable material element (typically made of liquid, gas, or a wax) expandable inside the actuator body in dependency of the ambient temperature, and an actuator piston connected to the valve spindle and coupled to the expandable material element such that the actuator piston moves away from the actuator body when the expandable material element expands.

As the ambient temperature increases, the valve will gradually close by means of the expandable material element expanding, which moves the actuator piston, which in turn moves the valve spindle. As a consequence, the amount of hot water entering the radiator is reduced as the ambient temperature increases. When the ambient temperature decreases, the valve will gradually open by means of the expandable material element contracting, which moves the actuator piston, which in turn moves the valve spindle. The thermal actuator thus enables setting a desired temperature for a room.

The desired temperature is typically adjustable by an adjustment mechanism of the control device. The adjustment mechanism adjusts how much the expandable material element has to move the actuator piston relative to the actuator body to close the valve.

Some control devices are provided with a handle rotatable relative to the radiator valve arrangement, where the handle is manually rotatable between different positions that set respective desired temperatures. In some control devices, rotation of the handle moves the actuator body between different positions relative to the radiator valve arrangement, which in turn changes how much the expandable material element has to move the actuator piston relative to the actuator body to close the valve.

As an alternative, or complement, to the manual adjustment of the adjustment mechanism by a handle, the control device may be provided with a motor operatively connected to the adjustment mechanism, where the motor is operable so as to cause the adjustment mechanism to shift from a current setting to another setting.

Even if known thermostatic radiator valve assemblies work well for their intended use, there is room for an improved control device for radiator valve arrangements and other types of valve arrangements. US 2018/259198 A1 is a relevant piece of prior art.

### SUMMARY

An object of the present disclosure is to provide an improved control device for attaching to a valve arrangement. This and other objects, which will become apparent in the following, are accomplished by a control device and a valve assembly as defined in the accompanying independent claims.

According to a first aspect of the present disclosure, there is provided a control device for attaching to a valve arrangement such that a valve spindle of the valve arrangement is actuable by the control device, where the valve spindle is movable relative to a valve body of the valve arrangement for adjusting a fluid flow through the valve arrangement.

The control device comprises a housing encompassing a thermal actuator configured to actuate the valve spindle in dependency of an ambient temperature around the control device when the control device is attached to the valve arrangement. The thermal actuator comprises an actuator body, an expandable material element expandable inside the actuator body in dependency of the ambient temperature, and an actuator piston coupled to the expandable material element such that the actuator piston moves away from the actuator body when the expandable material element expands, wherein the actuator piston is configured to connect to the valve spindle when the control device is attached to the valve arrangement.

The housing further encompasses an adjustment mechanism configurable in different settings, where each one of the different settings sets a respective distance that the expandable material element has to move the actuator piston relative to the actuator body to position the valve spindle at a given position relative to the valve body when the control device is attached to the valve arrangement.

The control device is provided with a motor operatively connected to the adjustment mechanism, wherein the motor is operable so as to cause the adjustment mechanism to shift from a current setting to another setting.

The control device is further provided with a resilient member arranged between the actuator body and the housing of the control device. The resilient member and the actuator body are arranged such that when the control device is attached to the valve arrangement and the valve spindle is in an advanced end position, the actuator body moves relative to the housing of the control device and compresses the resilient member when the expandable material element expands.

When the valve spindle is in the advanced end position and the expandable material element expands, the actuator piston will push on the valve spindle (directly or via an intermediate part). The valve spindle cannot move, however, since it is in the advanced end position. As a consequence, the expansion of the expandable material element may unintentionally cause the adjustment mechanism to shift from a current setting to another setting. Such unintentional shifting disturbs the thermostatic effect of the control device. For example, the desired temperature of a room (which is set by a setting of the adjustment mechanism) will be shifted when the unintentional shifting of the adjustment mechanism occurs. The resilient member thus enables an improved control device.

There is a resistance to shift the adjustment mechanism from a current setting to another setting when the motor is not operated due to friction of the adjustment mechanism and/or the motor itself. In some cases, the resistance to shift the adjustment mechanism from a current setting to another setting when the motor is not operated is so large that it is unlikely that the expandable material element unintentionally causes the adjustment mechanism to shift from a current setting to another setting. In any case, when the valve spindle is in the advanced end position and the expandable material element expands, the actuator piston may push on the valve spindle such that components of the valve assembly break or are more prone to break. For example, the thermal actuator may break. In particular, the actuator body may crack or the actuator piston may break. As another example, the adjustment mechanism or the motor may be damaged. In yet another example, the valve spindle or other parts of the valve arrangement may break. The resilient member thus enables an improved control device.

The valve arrangement may be a radiator valve arrangement. However, the valve arrangement may be other types of valve arrangements as well, such as a control valve arrangement.

The control device may also be called a thermostatic head.

The valve spindle of the valve arrangement may also be called an actuating spindle or a shaft.

As mentioned, the control device is suitable for attaching to a valve arrangement such that a valve spindle of the valve arrangement is actuable by the control device. This means that the movement of the valve spindle is controllable by the control device. The valve spindle is actuable by means of movement of the actuator piston. The actuator piston may bear on the valve spindle directly or via an intermediate part. Alternatively, the actuator piston may be mechanically connected to the valve spindle directly or via an intermediate part. Movement of the actuator piston relative to the housing of the control device is transferred to movement of the valve spindle relative to the valve body.

The housing of the control device may have a tubular shape extending in an axial direction of the control device. A tubular shape means an elongated shape like a tube. Such a shape is typically round and hollow. The housing of the control device may have the shape of a cylinder. The housing of the control device may have other elongated shapes or more general shapes as well. The housing of the control device may, e.g., be made of plastics or metal.

The actuator body is a casing encapsulating the expandable material element such that expansion of the expandable material element controls movement of the actuator piston relative to the actuator body. The actuator body is preferably made of a material with relatively high thermal conductivity, such as metal. However, the actuator may be made of other materials as well, such as plastics.

The expandable material element expands as the ambient temperature around the control device increases. In other words, as the ambient temperature around the control device increases, the temperature of the expandable material element will increase, which causes the expandable material element to expand. Furthermore, the expandable material element contracts as the ambient temperature around the control device decreases. In other words, as the ambient temperature around the control device decreases, the temperature of the expandable material element will decrease, which causes the expandable material element to contract. The expandable material may for example be made of wax, a liquid, or a gas.

The actuator piston is coupled to the expandable material element such that the actuator piston moves relative to the actuator body in dependency of the ambient temperature around the control device. In particular, the actuator piston moves away, in an advancing direction, from the actuator body when the expandable material element expands, and the actuator piston moves in the opposite direction, in a retracting direction, relative to the actuator body when the expandable material element contracts.

As mentioned, the different settings of the adjustment mechanism set respective distances that the expandable material element has to move the actuator piston relative to the actuator body to position the valve spindle at a given position relative to the valve body when the control device is attached to the valve arrangement. For example, the adjustment mechanism adjusts how much the actuator piston must expand relative to the actuator body to close the valve. In other words, the given position may be the advanced end position of the valve spindle. The given position may alternatively be the retracted end position of the valve spindle, or any position in between the retracted end position and the advanced end position of the valve spindle.

The motor is an electric machine configured to convert electrical energy into mechanical energy. The motor may also be referred to as an electric motor. The motor may operate via an interaction between a magnetic field and electric current in a wire winding of the motor for generating a force in the form of a torque applied on a shaft of the motor. The shaft of the motor is a rigid part (e.g., in the form of a cylinder) that extrudes out from the motor and its housing.

The valve arrangement may comprises a valve inlet and a valve outlet provided on a valve body. The valve arrangement may further comprise a valve comprising a seat and closing member movable relative to the seat for enabling a variable cross section of a passage between the valve inlet and the valve outlet to be changed. The valve outlet is arranged downstream of the valve inlet. The valve arrangement is arranged to control a fluid flow between the valve inlet and the valve outlet. The control of fluid flow is provided by the valve, which may, e.g., be a linear valve or a rotary valve. Other types of valves are also possible. The valve spindle is connected to the closing member. Thus, the position of the valve spindle relative to the valve body determines the opening size of the valve via the closing member. In other words, a position of the valve spindle relative to a valve body of the valve arrangement determines an opening size of a valve of the valve arrangement.

If the valve is a linear valve, the closing member may move between different positions relative to the seat such that the variable cross section of the passage between the valve inlet and the valve outlet is changed. In other words, as the closing member moves closer to the seat, the amount of fluid flowing through the valve arrangement decreases. As the closing member moves away from the seat, the amount of fluid flowing through the valve arrangement increases. The closing member may be movable along an axial direction of the valve arrangement. The valve spindle may be actuated in a linear direction along the axial direction of the valve arrangement. Furthermore, the valve spindle may extend along the axial direction of the valve arrangement. In addition, the control device may be attachable to the valve arrangement such that the axial direction of the control device overlaps with the axial direction of the valve arrangement.

If the valve is a linear valve, a linear movement actuator piston may be transferred to a linear movement of the valve spindle, which in turns controls a linear movement of the closing member.

If the valve is a rotary valve, a linear movement actuator piston may be transferred to a rotational movement of the closing member. In a first example, linear movement actuator piston is transferred to a linear movement of the valve spindle, which in turns controls a rotational movement of the closing member. In a second example, linear movement actuator piston is transferred to a rotational movement of the valve spindle, which in turns controls a rotational movement of the closing member.

The advanced end position of the valve spindle is an end position of the valve spindle relative to the valve body where the valve spindle cannot move further away from the control device when it is attached to the valve arrangement. The advanced end position of the valve spindle may be associated with a position of the closing member where the valve is considered as fully closed, i.e. completely blocking fluid from flowing through the valve arrangement (except for any small leakage flow).

The retracted end position of the valve spindle is an end position of the valve spindle relative to the valve body opposite to the advanced end position. The retracted end position of the valve spindle may be associated with a position of the closing member where the valve is considered as fully open, i.e. providing for a largest defined opening area through the valve arrangement.

The valve spindle is movable between the retracted end position and the advanced end position. The movement of the valve spindle (and correspondingly also the opening degree of the valve) may be controlled in a step-less manner. However, the opening degree may be discretely controlled in steps between the fully closed position and the fully opened position.

Resilience is the ability of a member to absorb energy when the member is elastically deformed, and to release that energy upon unloading.

According to a least one exemplary embodiment, the resilient member comprises a spring member. The spring member is a part formed by an elastic but mostly rigid material (such as metal) that is shaped into a form (such as a coil) that can return into shape after being compressed or extended. Alternatively to (or in combination with) the spring member, the resilient member may comprise a resilient material such as rubber.

According to a least one exemplary embodiment, a first end of the resilient member is stationarily arranged with respect to the housing of the control device, and a second end of the resilient member is stationarily arranged with respect to the actuator body. Any of the first end and the second end may be mechanically attached to the housing of the control device and the actuator body, respectively (directly or via respective intermediate parts). Alternatively, or additionally, the resilient member may be held in place by being under constant compression for all possible positions of the actuator body relative to the housing of the control device.

If the resilient member comprises a spring member, a first end of the spring member may be stationarily arranged to the housing of the control device and a second end of the spring member may be stationarily arranged with respect to the actuator body.

According to a least one exemplary embodiment, the control device is arranged to actuate the valve spindle in the axial direction of the control device when the control device is attached to the valve arrangement. In that case, the actuator body may be arranged to move in the axial direction of the control device when the expandable material element expands, when the control device is attached to the valve arrangement, and when the valve spindle is in the advanced end position. In this way, the movement direction of the actuator body relative to the housing of the control device is aligned with the movement direction of the valve spindle relative to the valve body.

When the control device is attached to the valve arrangement, when the expandable material element expands, and when the valve spindle is in the advanced end position, the actuator body moves away from the valve arrangement to compress the resilient member. This direction of the movement may be referred to as the actuator body moving in the retracting direction. After the expandable material element stops expanding and starts to contract, the actuator body moves closer to the valve arrangement. This direction of the movement may be referred to as the actuator body moving in the advancing direction.

According to a least one exemplary embodiment, the resilient member is configured such that a force required to compress the resilient member is less than a force required to overcome a resistance to shift the adjustment mechanism from a current setting to another setting when the motor is not operated. In this way, unintentional shifting of the adjustment mechanism is avoided. Thus, an improved control device is provided.

The force required to compress the resilient member may be referred to as a first force and the force required to overcome a resistance to shift the adjustment mechanism from a current setting to another setting when the motor is not operated may be referred to as a second force. As mentioned, the first force is preferably less than the second force. More preferably, the first force is less than a half of the second force. In this way, less strain is put on the components of the valve assembly when the control device is attached to the valve arrangement, when the expandable material element expands, and when the valve spindle is in the advanced end position. Thus, an improved control device is provided.

According to a least one exemplary embodiment, the resilient member is configured such that the force required to compress the resilient member is larger than a force required to overcome a resistance to actuate the valve spindle when the expandable material element expands, when the control device is attached to the valve arrangement, when the valve spindle is not in the advanced end position, and when the motor is not operated. In this way, the resilient member does not significantly degrade the level of control of the fluid flow through the valve arrangement by the control device.

The force required to overcome a resistance to actuate the valve spindle when the expandable material element expands may be referred to as a third force. As mentioned, the first force is preferably larger than the third force. More preferably, the first force is larger than two times the third force. In this way, a high level of control of fluid flow through the valve arrangement is maintained. Thus, an improved control device is provided.

The adjustment mechanism may be implemented in different ways. In a first example, the adjustment mechanism is implemented using a principle of shifting a position of the actuator body relative to the valve body. In a second example, the adjustment mechanism is implemented using a principle of varying a length of an intermediate part connecting the actuator piston to the valve spindle. Other ways of implementing the adjustment mechanism are also possible.

According to a least one exemplary embodiment, the adjustment mechanism is configurable in its different settings by shifting a position of the actuator body relative to the valve body when the control device is attached to the valve arrangement. When the control device is attached to the valve arrangement, and the actuator body moves relative to the valve body, the actuator body also moves relative to the housing of the control device. The further away from the valve body the actuator body is positioned, the further the actuator piston must be positioned away from the actuator body to position the valve spindle in a particular position relative to the valve body. The actuator body may be moved relative to the housing of the control device in a step-less manner. However, different positions of the actuator relative to the housing of the control device may be discretely controlled in steps.

According to a least one exemplary embodiment, the housing of the control device comprises a first body part configured to be rotationally locked to the valve body when the control device is attached to the valve arrangement. In that case, the control device may be provided with a second body part rotatably attached to the first body part around a first axis. The actuator body is attached to the second body part, and the adjustment mechanism is configured to shift the position the actuator body relative to the valve body by means of rotating the second body part relative to the first body part when the control device is attached to the valve arrangement.

The first axis may overlap with the axial direction of the control device.

According to a least one exemplary embodiment, the control device comprises an intermediate body part rotatably attached to the first body part around a second axis. Furthermore, the intermediate body part and the second body part are arranged to transfer rotational movement of the intermediate body part to the second body part such that the second body part moves along the first axis relative to the first body part, and wherein the motor is arranged to rotate the intermediate body part when operated.

The second axis may be parallel to the first axis. Alternatively, the first axis and the second axis may overlap. The motor is operatively connected to the intermediate body part such that an operation of the motor causes the intermediate body part to rotate, and thereby causing the actuator body to move relative the housing of the control device. The motor may comprise a shaft that is connected to a gear operatively connected to the intermediate body part.

According to a least one exemplary embodiment, the adjustment mechanism comprises an expandable part configurable in different lengths, where the expandable part is arranged to connect the actuator piston to the valve spindle when the control device is attached to the valve arrangement. The adjustment mechanism is configurable in its different settings by means of configuring the expandable part in its different lengths when the control device is attached to the valve arrangement. The expandable part is an intermediate part between the actuator piston and the valve spindle. One end of the expandable part may be rigidly attached to the actuator piston. The other end of the expandable part may be configured to bear on the valve spindle when the control device is attached to the valve arrangement. The actuator body is preferably stationarily arranged with respect to the housing of the control device, which may be advantageous. In the case when the different settings of the adjustment mechanism are controlled by shifting a position of the actuator body relative to the housing of the control device, different positions of the actuator body relative to housing of the control device may be associated with different heat transfer characteristics from the outside of the control device into expandable material element, which may degrade the accuracy of the thermostatic function of the control device. The expandable part may be configurable in different lengths in a step-less manner. However, the different lengths may be discretely controlled in steps between a fully extended length and a fully contracted length. The shorter the length of the expandable part, the further the actuator piston must be positioned away from the actuator body to position the valve spindle in a particular position relative to the valve body.

According to a least one exemplary embodiment, the expandable part comprises a first component and a second component, where the first component is connected to the second component by a threaded connection. In that case, the expandable part may be configurable in its different lengths by means of rotating the first component relative to the second component.

According to a least one exemplary embodiment, the motor is arranged to rotate the first component or the second component when operated. The motor is operatively connected to any of the first and the second components such that an operation of the motor causes the connected component rotate relative to the other component, and thereby causing the expandable part to increase or decrease in length. The motor may comprise a shaft that is connected to a gear operatively connected to any of the first and the second components.

According to a least one exemplary embodiment, the control device comprises a wireless communication device configured to operate the motor in dependency of a received wireless control signal. In this way, the motor can be operated remotely to cause the adjustment mechanism to shift from a current setting to another setting.

According to a least one exemplary embodiment, the control device comprises a manual input interface configured to operate the motor in dependency of a manual input on the manual input interface. In this way, the motor can be operated via a direct interaction of the control device to cause the adjustment mechanism to shift from a current setting to another setting.

According to a least one exemplary embodiment, the adjustment mechanism constitutes first means of setting the distance (that the expandable material element has to move the actuator piston relative to the actuator body to position the valve spindle at a given position relative to the valve body when the control device is attached to the valve arrangement), and the control device is provided with second means of setting the distance. The second means may comprise manual means (such as a rotatable handle) for moving the actuator body relative to the housing of the control device or for shifting the length of the expandable part discussed above. The second means enable both setting the distance using the motor (e.g. via a received wireless control signal) and via another type of interaction with the control device (such as manually rotating a rotatable handle).

According to a least one exemplary embodiment, the second means comprises a handle arranged attached to the second body part. In that case, the handle may be configured to shift the position of the actuator body relative to the valve body by means of rotating the handle relative to the first body part when the control device is attached to the valve arrangement and when the motor is not operated. The handle may be part of the housing of the control device.

According to a least one exemplary embodiment, the motor is connected to the adjustment mechanism via a disengageable transmission, and the control device comprises a manual switch configured to engage and disengage the disengageable transmission. In this way, the operative connection between the motor and the adjustment mechanism can be engaged and disengaged. If the control device is provided with the first and the second means of setting the distance, the control device can be configured such that the distance is controllable by only the second means. In that case, the distance may be set manually via the second means without interference from the first means, which may be advantageous.

According to a least one exemplary embodiment, the control device comprises a battery configured to supply power to the motor. In this way, external cables for connection to mains electricity can be omitted. Alternatively, or additionally, the motor may be supplied with power via a mains connection.

According to a second aspect of the present disclosure, there is provided a valve assembly comprising the control device and the valve arrangement according to the discussions above. The valve assembly is associated with the above-discussed advantages. The valve arrangement comprises: a valve body having a valve inlet and a valve outlet; a valve spindle movable relative to the valve body; and a valve comprising a seat and closing member movable relative to the seat for enabling a variable cross section of a passage between the valve inlet and the valve outlet to be changed, where the closing member is connected to the valve spindle.

According to a third aspect of the present disclosure, there is provided a fluid distribution system comprising the valve assembly according to the discussions above. The fluid distribution system is associated with the above-discussed advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present disclosure will become apparent when studying the appended claims and the following description. The skilled person realizes that different features of the present disclosure may be combined to create embodiments other than those described in the following, without departing from the scope of the present disclosure.

### BRIEF DESCRIPTION OF THE DRAWINGS

With reference to the appended drawings, below follows a more detailed description of embodiments of the present disclosure cited as examples. In the drawings:
Figure 1 is schematic illustration of a valve assembly comprising a valve arrangement and a control device according to a general representation of the teachings of this disclosure;
Figure 2A shows a valve assembly with a valve arrangement and a control device according to a first embodiment, where a valve of the valve arrangement is in a first position;
Figure 2B shows an enlarged view of the valve of the valve arrangement of Figure 2A;
Figure 3 shows the control device of the valve assembly of Figure 2A;
Figure 4A shows a valve assembly with a valve arrangement and a control device according to the first embodiment, where the valve of the valve arrangement is in a second position;
Figure 4B shows an enlarged view of the valve of the valve arrangement of Figure 4A;
Figure 5 shows the control device of the valve assembly of Figure 4A;
Figure 6 shows a perspective view of a control device according to the first embodiment;
Figure 7 shows internal components of a control device according to the first embodiment; and
Figure 8 shows a valve assembly with a valve arrangement and a schematic illustration of a control device according to a second embodiment;
Figures 9A-9C show different views of a control device according to the second embodiment; and
Figure 10 illustrates a fluid distribution system.

### DETAILED DESCRIPTION

The present disclosure is described more fully below with reference to the accompanying drawings, in which certain aspects of the present disclosure are shown. The present disclosure may, however, be embodied in many different forms and should not be construed as limited to the embodiments and aspects set forth herein; rather, these embodiments are provided by way of example so that this disclosure will be thorough and complete, and will fully convey the scope of the present disclosure to those skilled in the art. Like numbers refer to like elements throughout the description.

It is to be understood that the present disclosure is not limited to the embodiments described herein and illustrated in the drawings; rather, the skilled person will recognize that many changes and modifications may be made within the scope of the appended claims.

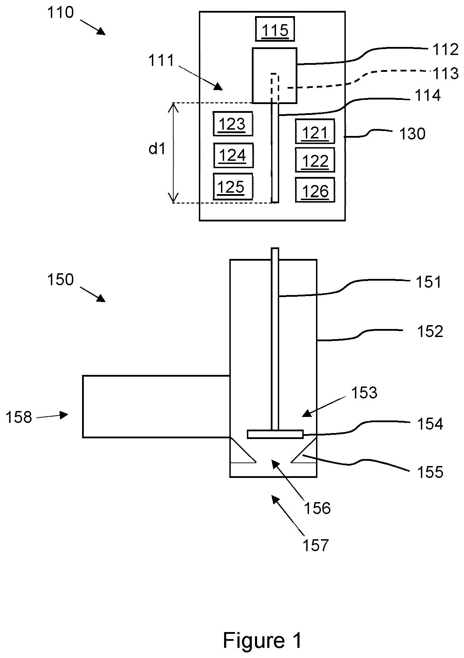

Figure 1 is a schematic illustration of an exploded view of a valve assembly comprising a valve arrangement 150 and a control device 110 according to a general representation of the teachings of this disclosure . The valve arrangement 150 may, e.g., be a radiator valve arrangement. The valve arrangement 150 comprises a valve body 152 having a valve inlet 157 and a valve outlet 158, where the valve outlet 158 is arranged downstream of the valve inlet 157. The valve arrangement 150 is configured to control a fluid flow between the valve inlet 157 and the valve outlet 158 via a valve spindle 151 passing through the valve body 152. The valve spindle 151 may also be called a shaft. Furthermore, the valve spindle 151 is movable in an axial direction of the valve arrangement 150 and is configured to be actuated in the axial direction of the valve arrangement 150 to control the fluid flow thorough the valve arrangement 150. In other words, the valve spindle 151 is movable relative to the valve body 152 for adjusting a fluid flow through the valve arrangement 150.

In Figure 1, the control of fluid flow is provided by a valve 153, which forms a linear valve. The valve 153 comprises a seat 155 and closing member 154 movable relative to the seat 155, where the closing member 154 is connected to the valve spindle 151. The closing member 154 is movable in the axial direction of the valve arrangement 150. When the closing member 154 moves between different positions relative to the seat 155, a variable cross section of a passage between the valve inlet 158 and the valve outlet 157 is changed. In other words, as the closing member 154 moves closer to the seat 155, the amount of fluid flowing through the valve arrangement 150 decreases. As the closing member 154 moves away from the seat 155, the amount of fluid flowing through the valve arrangement 150 increases. The closing member 154 (and consequently also the valve spindle 151) has a retracted end position in which the valve 153 is considered as fully open, i.e. providing for a largest defined opening area through the valve arrangement 150. Similarly, the closing member 154 (and consequently also the valve spindle 151) has an advanced end position in which the valve 153 is considered as fully closed, i.e. completely blocking fluid from flowing through the valve arrangement 150 (or only allowing a small leakage flow). The opening degree of the valve is controlled by moving the valve spindle 151 between its retracted end position and its advanced end position. The opening degree of the valve 153 may, in at least some exemplary embodiments, be controlled in a step-less manner. However, in at least some exemplary embodiments, the opening degree may be discretely controlled in steps between the fully closed position and the fully opened position.

The control device 110 is configured for being attached to the valve arrangement 150 such that the valve spindle 151 of the valve arrangement 150 is actuable by the control device 110. In Figure 1, the control device 110 may be attached to the valve arrangement 150 by moving downwards along the axial direction of the control device 110. The control device 110 and the valve arrangement 150 together form a valve assembly. The control device 110 may also be called a thermostatic head.

The control device 110 comprises a housing 130 encompassing a thermal actuator 111 configured to actuate the valve spindle 151 in dependency of an ambient temperature around the control device 110 when the control device 110 is attached to the valve arrangement 150. The thermal actuator 111 comprises an actuator body 112, an expandable material element 113 expandable inside the actuator body 112 in dependency of the ambient temperature, and an actuator piston 114 coupled to the expandable material element 113 such that the actuator piston 114 moves away from the actuator body 112 when the expandable material element 113 expands. The actuator piston 114 is configured to connect to the valve spindle 151 when the control device 110 is attached to the valve arrangement 150.

The control device 110 may be arranged such that the actuator piston 114 bears on the valve spindle 151 when the control device 110 is attached to the valve arrangement 150. As an alternative, the control device 110 may be arranged such that the actuator piston 114 is connected to the valve spindle 151 via an intermediate part when the control device 110 is attached to the valve arrangement 150.

The control device 110 comprises an adjustment mechanism 126 configurable in different settings, wherein each one of the different settings sets a respective distance d1 that the expandable material element 113 has to move the actuator piston 114 relative to the actuator body 112 to position the valve spindle 151 at a given position relative to the valve body 152 when the control device 110 is attached to the valve arrangement 150. For example, the adjustment mechanism 126 adjusts how much actuator piston 114 must expand relative to the actuator body 112 to close the valve 153. In other words, the given position may be the advanced end position of the valve spindle 151. The given position may alternatively be the retracted end position of the valve spindle 151, or any position in between the retracted end position and the advanced end position of the valve spindle 151.

The control device 110 comprises a motor 121 operatively connected to the adjustment mechanism 126. The motor 121 is operable so as to cause the adjustment mechanism 126 to shift from a current setting to another setting. The motor 121 is operatively connected to the adjustment mechanism 126 via transmission 122. In Figure 1, the motor 121 is enclosed by the housing 130 of the control device 110. The motor 121 may alternatively be arranged on the exterior of the housing 130 directly or via intermediate parts.

The control device 110 comprises a wireless communication device 123 configured to operate the motor 121 in dependency of a received wireless control signal. In this way, the motor 121 can be operated remotely to cause the adjustment mechanism 126 to shift from a current setting to another setting.

The control device 110 comprises a manual input interface 124 configured to operate the motor 121 in dependency of a manual input on the manual input interface 124. In this way, the motor 121 can be operated via a direct interaction of the control device 110 to cause the adjustment mechanism 126 to shift from a current setting to another setting.

The control device 110 comprises a battery 125 configured to supply power to the motor 121. In this way, external cables for connection to a mains electricity can be omitted. Alternatively, or in combination of, the motor 121 may be supplied with power via a mains connection.

The control device 110 is provided with a resilient member 115 arranged between the actuator body 112 and the housing 130 of the control device 110. The resilient member 115 and actuator body 112 are arranged such that when the control device 110 is attached to the valve arrangement 150 and the valve spindle 151 is in an advanced end position, the actuator body 112 moves relative to the housing 130, of the control device 110 and compresses the resilient member 115 when the expandable material element 113 expands.

The resilient member 115 may comprise a spring member. Alternatively, or additionally, the resilient member 115 may be resilient by means of a resilient material such as rubber.

A first end of the resilient member 115 may be stationarily arranged with respect to the housing 130 of the control device 110. In that case, a second end of the resilient member 115 may be stationarily arranged with respect to the actuator body 112.

In Figure 1, it can be seen that the control device has an elongated shape in an axial direction of the control device 110. The axial direction of the control device 110 overlaps with the axial direction of the of the valve arrangement 150. The control device 110 is arranged to actuate the valve spindle 151 in the axial direction of the control device 110 when the control device 110 is attached to the valve arrangement 150.

Furthermore, the actuator body 112 is arranged to move in the axial direction of the control device 110 when the expandable material element 113 expands, when the control device 110 is attached to the valve arrangement 150, and when the valve spindle 151 is in the advanced end position. During such a scenario, the actuator body 112 moves away from the valve arrangement 150 to compress the resilient member 115. This direction of the movement may be referred to as the actuator body 112 moving in a retracting direction. After the expandable material element 113 stops expanding and starts to contract, the actuator body 112 moves closer to the valve arrangement 150. This direction of the movement may be referred to as the actuator body 112 moving in an advancing direction.

The resilient member 115 may be configured such that a force required to compress the resilient member 115 is less than a force required to overcome a resistance to shift the adjustment mechanism 126 from a current setting to another setting when the motor 121 is not operated. In this way, unintentional shifting adjustment mechanism 126 is avoided.

The resilient member 115 may be configured such that the force required to compress the resilient member 115 is larger than a force required to overcome a resistance to actuate the valve spindle 151 when the expandable material element 113 expands, when the control device 110 is attached to the valve arrangement 150, when the valve spindle 151 is not in the advanced end position, and when the motor 121 is not operated. In this way, the resilient member 115 does not significantly degrade the level of control of the fluid flow through the valve arrangement 150 by the control device 110.

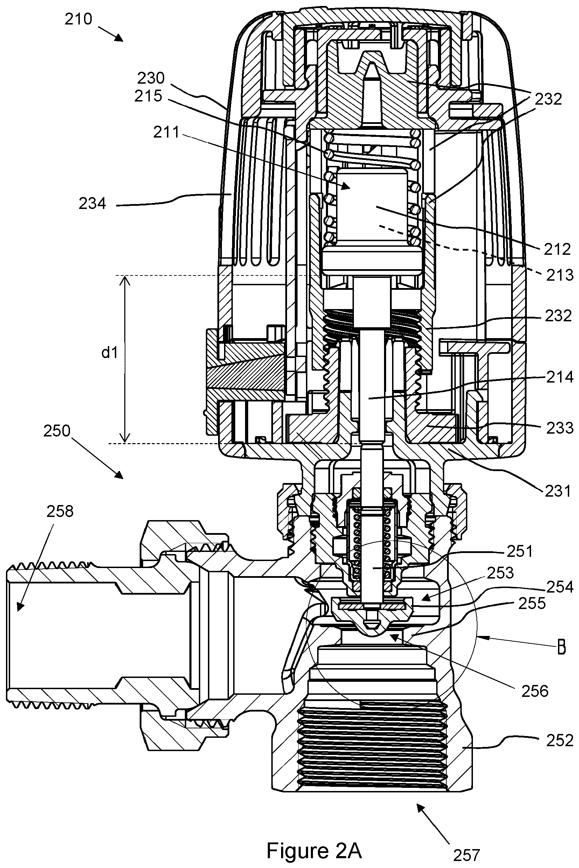

Figures 2A-2B, 3, 4A-4B, 5, 6, and 7 show different views of a control device 210 according to a first embodiment. The control device 210 may also be called a thermostatic head.

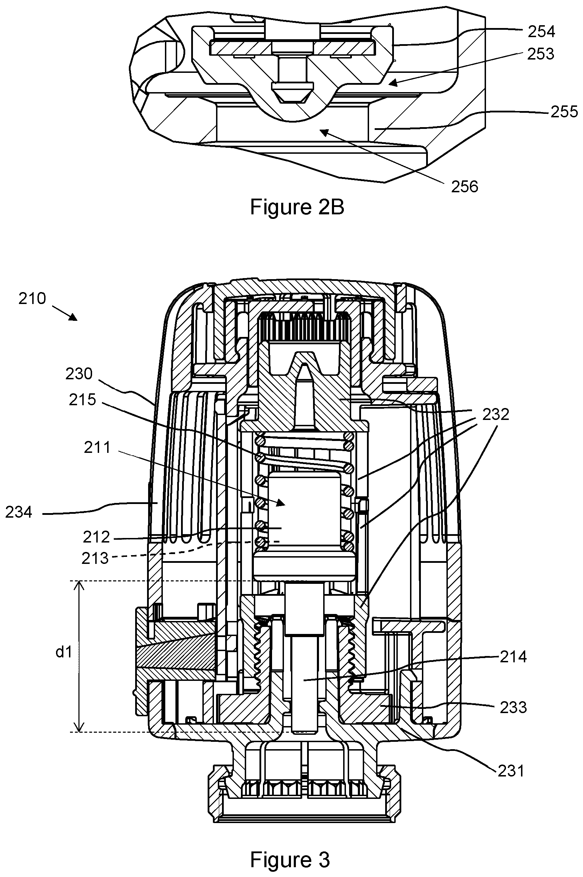

In particular, Figure 2A shows a valve assembly with a valve arrangement 250 and the control device 210, where a valve 253 of the valve arrangement 250 is in a first position. Figure 2B shows an enlarged view of the valve 253 of the valve arrangement 250 of Figure 2A. Figure 3 shows the control device 210 of the valve assembly of Figure 2A.

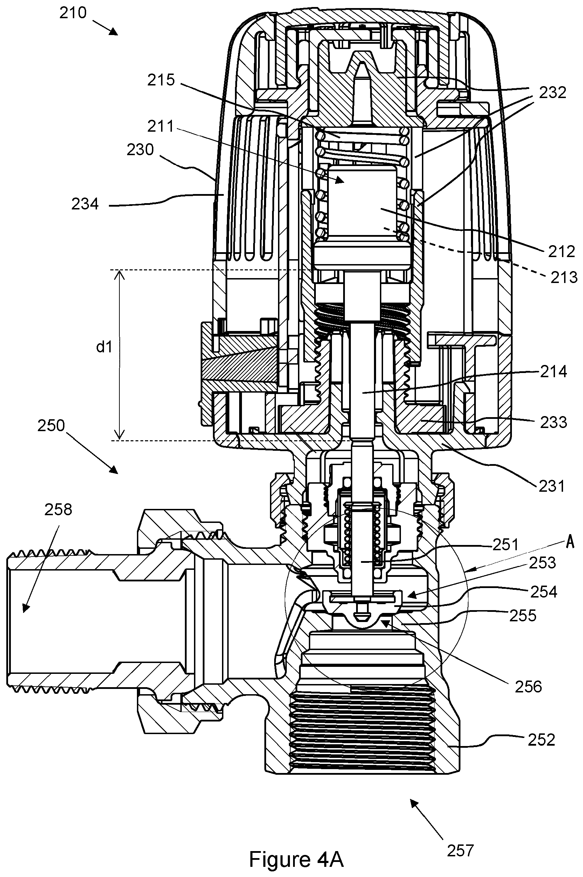

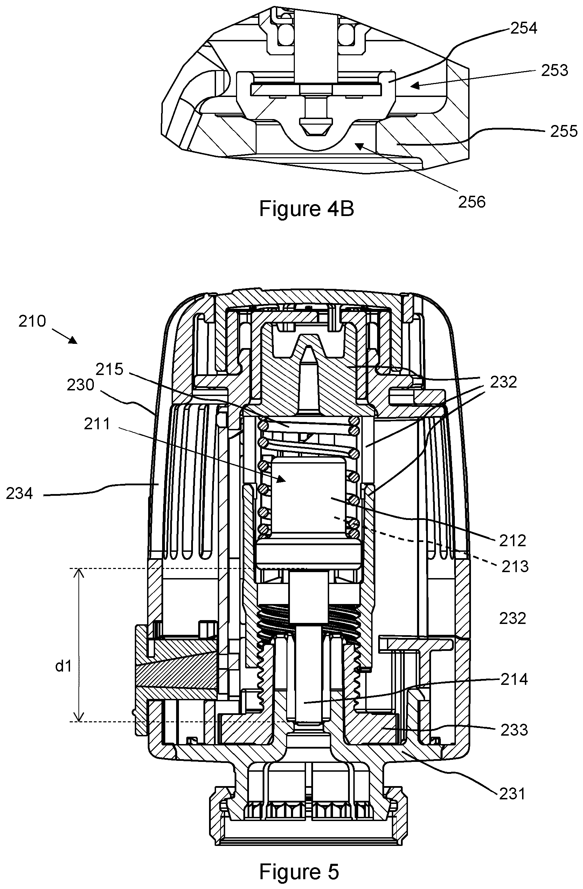

Furthermore, Figure 4A shows a valve assembly with the valve arrangement 250 and the control device 210, where the valve 253 of the valve arrangement 250 is in a second position. Figure 4B shows an enlarged view of the valve 253 of the valve arrangement 250 of Figure 4A. Figure 5 shows the control device 210 of the valve assembly of Figure 4A.

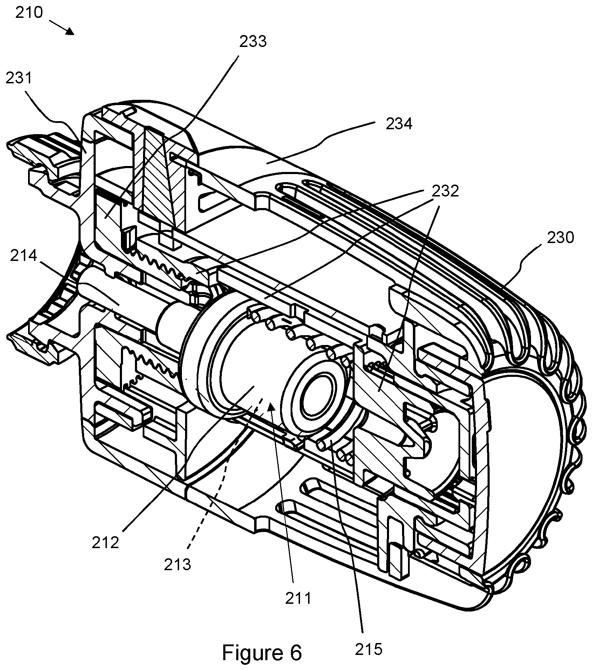

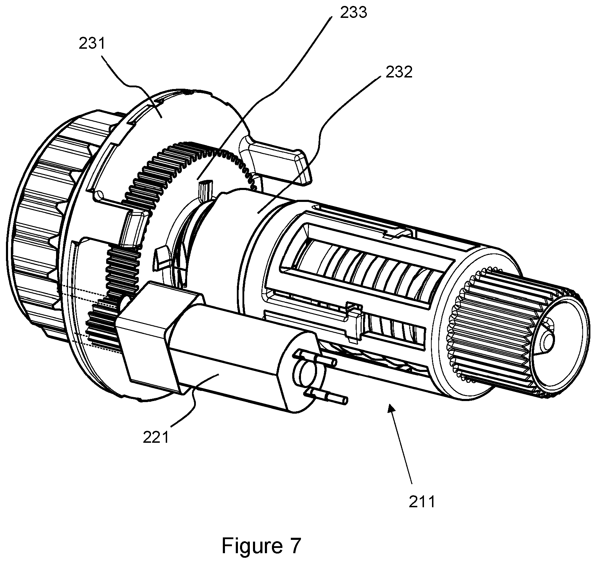

Figure 6 shows a perspective view of the control device 210 and Figure 7 shows internal components of the control device 210.

The valve arrangement 250 is a radiator valve arrangement. The valve arrangement 250 may operate under the same principles as the valve arrangement 150 of Figure 1. In particular, the valve arrangement 250 comprises a valve body 252 having a valve inlet 257 and a valve outlet 258, where the valve outlet 258 is arranged downstream of the valve inlet 257. The valve arrangement 250 is configured to control a fluid flow between the valve inlet 257 and the valve outlet 258 via a valve spindle 251 passing through the valve body 252. The valve spindle 251 may also be called a shaft. Furthermore, the valve spindle 251 is movable in an axial direction of the valve arrangement 250 and is configured to be actuated in the axial direction of the valve arrangement 250 to control the fluid flow thorough the valve arrangement 250. In other words, the valve spindle 251 is movable relative to the valve body 252 for adjusting a fluid flow through the valve arrangement 250.

The control of fluid flow is provided by a valve 253, which forms a linear valve. The valve 253 comprises a seat 255 and closing member 254 movable relative to the seat 255, where the closing member 254 is connected to the valve spindle 251. The closing member 254 is movable in the axial direction of the valve arrangement 250. When the closing member 254 moves between different positions relative to the seat 255, a variable cross section of a passage between the valve inlet 257 and the valve outlet 258 is changed. In other words, as the closing member 254 moves closer to the seat 255, the amount of fluid flowing through the valve arrangement 250 decreases. As the closing member 254 moves away from the seat 255, the amount of fluid flowing through the valve arrangement 250 increases. The closing member 254 (and consequently also the valve spindle 251) has a retracted end position in which the valve 253 is considered as fully open, i.e. providing for a largest defined opening area through the valve arrangement 250. Similarly, the closing member 254 (and consequently also the valve spindle 251) has an advanced end position in which the valve 253 is considered as fully closed, i.e. completely blocking fluid from flowing through the valve arrangement 250 (or only allowing a small leakage flow). The opening degree of the valve is controlled by moving the valve spindle 251 between its retracted end position and its advanced end position. The opening degree of the valve 253 may, in at least some exemplary embodiments, be controlled in a step-less manner. However, in at least some exemplary embodiments, the opening degree may be discretely controlled in steps between the fully closed position and the fully opened position.

Figures 2A and 2B shows the valve arrangement 250 where the valve 253 is fully opened and the closing member 254 (and consequently also the valve spindle 251) is in the retracted end position. Figures 4A and 4B show the valve arrangement 250 where the valve 253 is fully closed and the closing member 254 (and consequently also the valve spindle 251) is in the advanced end position.

The control device 210 is configured for being attached to the valve arrangement 250 such that the valve spindle 251 of the valve arrangement 250 is actuable by the control device 210.

The control device 210 and the valve arrangement 250 together form a valve assembly. Figures 2A and 4A shown the valve assembly. Figures 3 and 5-7 show the control device 210 without the valve arrangement 250.

The control device 210 comprises a housing 230 encompassing a thermal actuator 211 configured to actuate the valve spindle 251 in dependency of an ambient temperature around the control device 210 when the control device 210 is attached to the valve arrangement 250. The thermal actuator 211 comprises an actuator body 212, an expandable material element 213 expandable inside the actuator body 212 in dependency of the ambient temperature, and an actuator piston 214 coupled to the expandable material element 213 such that the actuator piston 214 moves away from the actuator body 212 when the expandable material element 213 expands. The actuator piston 214 is configured to connect to the valve spindle 251 when the control device 210 is attached to the valve arrangement 250.

The control device 210 is arranged such that the actuator piston 214 bears on the valve spindle 251 when the control device 210 is attached to the valve arrangement 250.

The control device 210 comprises an adjustment mechanism configurable in different settings. In the control device 210, the adjustment mechanism comprises a first body part 231, a second body part 232, and an intermediate body part 233, which are discussed in more detail below. Each one of the different settings sets a respective distance d1 that the expandable material element 213 has to move the actuator piston 214 relative to the actuator body 212 to position the valve spindle 251 at a given position relative to the valve body 252 when the control device 210 is attached to the valve arrangement 250. For example, the adjustment mechanism adjusts how much actuator piston 214 must expand relative to the actuator body 212 to close the valve 253. In other words, the given position may be the advanced end position of the valve spindle 251. The given position may alternatively be the retracted end position of the valve spindle 251, or any position in between the retracted end position and the advanced end position of the valve spindle 251.

The control device 210 comprises a motor 221 (see Figure 7) operatively connected to the adjustment mechanism. The motor 221 is operable so as to cause the adjustment mechanism to shift from a current setting to another setting. The motor 221 is operatively connected to the adjustment mechanism via a transmission. The motor 221 is encompassed by the housing 230 of the control device 210. The motor 221 may alternatively be arranged on the exterior of the housing 230 directly or via intermediate parts.

The control device 210 may comprise a wireless communication device (not shown) configured to operate the motor 221 in dependency of a received wireless control signal. In this way, the motor 221 can be operated remotely to cause the adjustment mechanism to shift from a current setting to another setting.

The control device 210 may comprise a manual input interface (not shown) configured to operate the motor 221 in dependency of a manual input on the manual input interface. In this way, the motor 221 can be operated via a direct interaction of the control device 210 to cause the adjustment mechanism to shift from a current setting to another setting.

The control device 210 may comprise a battery (not shown) configured to supply power to the motor 221. In this way, external cables for connection to a mains electricity can be omitted.

Alternatively, or in combination of, the motor 221 may be supplied with power via a mains connection.

The adjustment mechanism of the control device 210 is configurable in its different settings by shifting a position of the actuator body 212 relative to the valve body 252 when the control device 210 is attached to the valve arrangement 250.

As is best illustrated in Figures 6 and 7, the housing 230 of the control device 210 comprises a first body part 231 configured to be rotationally locked to the valve body 252 when the control device 210 is attached to the valve arrangement 250. The control device 210 is provided with a second body part 232 rotatably attached to the first body part 231 around a first axis. The first axis overlaps with the axial direction of the control device 230. The actuator body 212 is attached to the second body part 232. Thus, the actuator body 212 moves as the second body part 232 moves.

The adjustment mechanism is configured to shift the position the actuator body 212 relative to the valve body 252 by means of rotating the second body part 232 relative to the first body part 231 when the control device 210 is attached to the valve arrangement 250.

Furthermore, the control device 210 comprises an intermediate body part 233 rotatably attached to the first body part 231 around a second axis. The second axis overlaps with the first axis. The intermediate body part 233 and the second body part 232 are arranged to transfer rotational movement of the intermediate body part 233 to the second body part 232 such that the second body part 232 moves along the first axis relative to the first body part 231. The motor 221 is arranged to rotate the intermediate body part 233 when operated.

The motor 221 is operatively connected to the intermediate part body part 233 such that an operation of the motor 221 causes the intermediate body part 233 to rotate, and thereby causing the actuator body 212 to move relative the housing 230 of the control device 210. The motor 221 comprises a shaft that is connected to a gear operatively connected to the intermediate body part 233.

The adjustment mechanism of the control device 210 constitutes first means of setting the distance d1. The control device 210 is further provided with second means of setting the distance d1. The second means comprises a handle 234 arranged attached to the second body part 233. The handle 234 is further configured to shift the position of the actuator body 212 relative to the valve body 252 by means of rotating the handle 234 relative to the first body part 231 when the control device 210 is attached to the valve arrangement 250 and when the motor 221 is not operated. As the handle rotates, the second body part 232 (and consequently also the actuator body 212) simultaneously rotates around the first axis and moves along the first axis relative to the first body part 231.

The second means enable both setting the distance d1 using the motor 221 (e.g. via a received wireless control signal) and via another type of interaction with the control device 210, particularly by manually a rotating the handle 234.

The motor 221 may be connected to the adjustment mechanism via a disengageable transmission. In that case, the control device 210 may comprise a manual switch configured to engage and disengage the disengageable transmission. As an example, the gear connected to the shaft of the motor 221, as seen in Figure 7, may be moved radially away from the intermediate body part 233 to disengage. In this way, the operative connection between the motor 221 and the adjustment mechanism can be engaged and disengaged.

The control device 210 is provided with a resilient member 215 arranged between the actuator body 212 and the housing 230 of the control device 210. The resilient member 215 and actuator body 212 are arranged such that when the control device 210 is attached to the valve arrangement 250 and the valve spindle 251 is in an advanced end position, the actuator body 212 moves relative to the housing 230, of the control device 210 and compresses the resilient member 215 when the expandable material element 213 expands.

The resilient member 215 comprises a spring member. Alternatively, or additionally, the resilient member 215 may be resilient by means of a resilient material such as rubber.

A first end of the resilient member 215 is stationarily arranged with respect to the housing 230 of the control device 210, and a second end of the resilient member 215 is stationarily arranged with respect to the actuator body 212. The resilient member 215 is held in place by being under compression for all possible positions of the actuator body 212 relative to the housing 230 of the control device 210. Note that the amount of compression may vary for different positions of the actuator body 212 relative to the housing 230 of the control device 210.

It can be seen that the control device 210 has an elongated shape in an axial direction of the control device 210. The axial direction of the control device 210 overlaps with the axial direction of the of the valve arrangement 250. The control device 210 is arranged to actuate the valve spindle 251 in the axial direction of the control device 210 when the control device 210 is attached to the valve arrangement 250.

Furthermore, the actuator body 212 is arranged to move in the axial direction of the control device 210 when the expandable material element 213 expands, when the control device 210 is attached to the valve arrangement 250, and when the valve spindle 251 is in the advanced end position. During such a scenario, the actuator body 212 moves further away from the valve arrangement 250 to compress the resilient member 215. This direction of the movement may be referred to as the actuator body 212 moving in a retracting direction. After the expandable material element 213 stops expanding and starts to compress, the actuator body 212 moves closer to the valve arrangement 250. This direction of the movement may be referred to as the actuator body 212 moving in an advancing direction.

The resilient member 215 is configured such that a force required to compress the resilient member 215 is less than a force required to overcome a resistance to shift the adjustment mechanism from a current setting to another setting when the motor 221 is not operated. In this way, unintentional shifting of the adjustment mechanism is avoided.

The resilient member 215 is configured such that the force required to compress the resilient member 215 is larger than a force required to overcome a resistance to actuate the valve spindle 251 when the expandable material element 213 expands, when the control device 210 is attached to the valve arrangement 250, when the valve spindle 251 is not in the advanced end position, and when the motor 221 is not operated. In this way, the resilient member 215 does not significantly degrade the level of control of the fluid flow through the valve arrangement 250 by the control device 210.

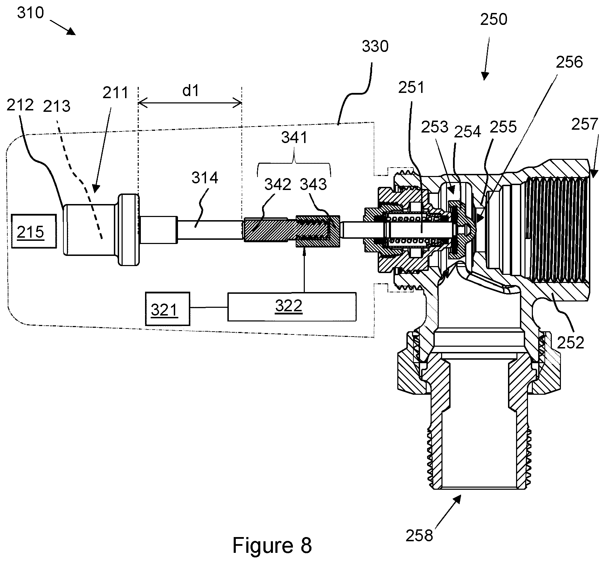

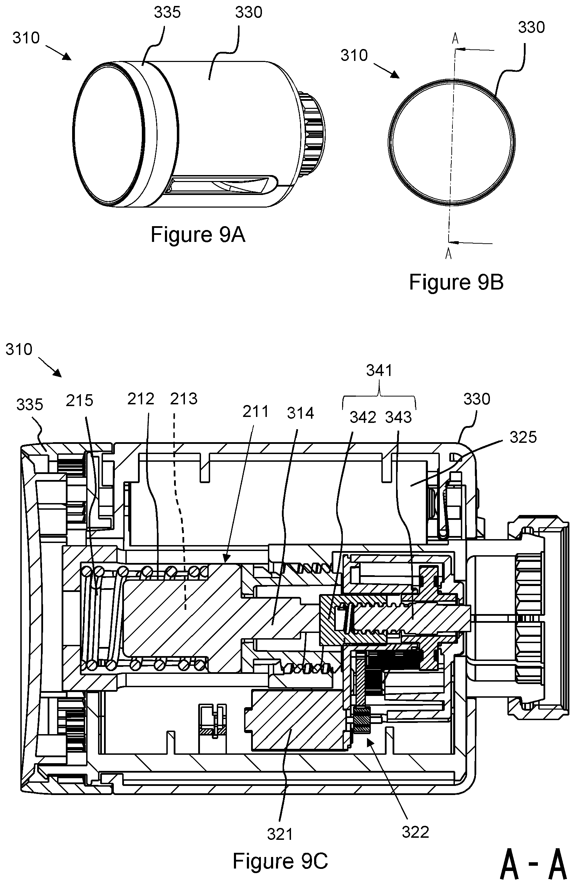

Figures 8 and 9A-9C show different views of a control device 310 according to a second embodiment. The control device 310 may also be called a thermostatic head. In particular, Figure 8 shows a valve assembly with the valve arrangement 250 from Figures 2A, 2B, 4A, 4B, and a schematic illustration of the control device 310. Figures 9A-9C show different views of the control device 310.

The control device 310 is configured for being attached to the valve arrangement 250 such that the valve spindle 251 of the valve arrangement 250 is actuable by the control device 310.

The control device 310 and the valve arrangement 250 together form a valve assembly. Figure 8 shows the valve assembly. Figures 9A-9C show the control device 310 without the valve arrangement 250.

The control device 310 shares some of the components of the control device 210, in particular the thermal actuator 211 comprising the actuator body 212 and the expandable material element 213. The thermal actuator 211 of the control device 310 comprises an actuator piston 314, which operates in the same way as in the control device 210, but is shorter than the actuator piston 214 to accommodate an expandable part 341.

The control device 310 comprises a housing 330 encompassing the thermal actuator 211 that is configured to actuate the valve spindle 251 in dependency of an ambient temperature around the control device 310 when the control device 310 is attached to the valve arrangement 250. The actuator piston 314 is configured to connect to the valve spindle 251 when the control device 310 is attached to the valve arrangement 250. The control device 310 is configured such that the actuator piston 314 is connected to the valve spindle 251 via the expandable part 341 (which is intermediate part) when the control device 310 is attached to the valve arrangement 250. The expandable part 341 is configured to bear on the valve spindle 251 when the control device 310 is attached to the valve arrangement 250.

The control device 310 comprises an adjustment mechanism configurable in different settings. In the control device 310, the adjustment mechanism comprises an expandable part 341, which in turn comprises a first component 342 and a second component 343, which are discussed in more detail below. Each one of the different settings sets a respective distance d1 that the expandable material element 213 has to move the actuator piston 314 relative to the actuator body 212 to position the valve spindle 251 at a given position relative to the valve body 252 when the control device 310 is attached to the valve arrangement 250. For example, the adjustment mechanism adjusts how much actuator piston 314 must expand relative to the actuator body 212 to close the valve 253. In other words, the given position may be the advanced end position of the valve spindle 251. The given position may alternatively be the retracted end position of the valve spindle 251, or any position in between the retracted end position and the advanced end position of the valve spindle 251.

The control device 310 comprises a motor 321 operatively connected to the adjustment mechanism. The motor 321 is operable so as to cause the adjustment mechanism to shift from a current setting to another setting. The motor 321 is operatively connected to the adjustment mechanism via a transmission 322. The motor 321 is encompassed by the housing 330 of the control device 310. The motor 321 may alternatively be arranged the exterior of the housing 330 directly or via intermediate parts.

The control device 310 may comprises a wireless communication device (not shown) configured to operate the motor 321 in dependency of a received wireless control signal. In this way, the motor 321 can be operated remotely to cause the adjustment mechanism to shift from a current setting to another setting.

The control device 310 may comprise a manual input interface 335 configured to operate the motor 321 in dependency of a manual input on the manual input interface. In this way, the motor 321 can be operated via a direct interaction of the control device 310 to cause the adjustment mechanism to shift from a current setting to another setting. The manual input interface 335 is rotatably attached to the housing 330 of the control device 310. When the manual input interface 335 is rotated from one position to another relative to the housing 330 of the control device 310, the motor 321 is operated so as to cause the adjustment mechanism to shift from a current setting to another setting.

The control device 310 comprises a battery 325 configured to supply power to the motor 321. In this way, external cables for connection to a mains electricity can be omitted. Alternatively, or in combination of, the motor 321 may be supplied with power via a mains connection.

The adjustment mechanism of the control device 310 comprises an expandable part 341 configurable in different lengths. The expandable part 341 is arranged to connect the actuator piston 314 to the valve spindle 251 when the control device 310 is attached to the valve arrangement 250. The adjustment mechanism is configurable in its different settings by means of configuring the expandable part 341 in its different lengths when the control device 310 is attached to the valve arrangement 250.

The expandable part 341 is an intermediate part between the actuator piston 314 and the valve spindle 251. One end of the expandable part 341 is configured to bear on the actuator piston 314. The other end of the expandable part 341 is configured to bear on the valve spindle 251 when the control device 310 is attached to the valve arrangement 250.

The expandable part 341 may be configurable in different lengths in a step-less manner. However, the different lengths may be discretely controlled in steps between a fully extended length and a fully contracted length. The shorter the length of the expandable part 341, the further the actuator piston 314 must be positioned away from the actuator body 212 to position the valve spindle 251 in a particular position relative to the valve body 252.

The expandable part 341 comprises a first component 342 and a second component 343, where the first component 342 is connected to the second component 343 by a threaded connection. The expandable part 341 is configurable in its different lengths by means of rotating the first component 342 relative to the second component 343.

The motor 321 may be arranged to rotate the first component 342 or the second component 343 when operated. In this example, the motor 321 is operatively connected to the second component 343 via a transmission 322 such that an operation of the motor 321 causes the connected second component 343 to rotate relative to the first component 342, and thereby causing the expandable part 341 to increase or decrease in length. The motor 321 comprises a shaft that is operatively connected to the transmission 322.

The control device 310 is provided with a resilient member 215 arranged between the actuator body 212 and the housing 330 of the control device 310. The resilient member 215 and actuator body 212 are arranged such that when the control device 310 is attached to the valve arrangement 250 and the valve spindle 251 is in an advanced end position, the actuator body 212 moves relative to the housing 330, of the control device 310 and compresses the resilient member 215 when the expandable material element 213 expands.

The resilient member 215 comprises a spring member. Alternatively, or in combination of, the resilient member 215 may be resilient by means of a resilient material such as rubber.

A first end of the resilient member 215 is stationarily arranged with respect to the housing 330 of the control device 310, and a second end of the resilient member 215 is stationarily arranged with respect to the actuator body 212. The resilient member 215 is held in place by being under constant compression for all possible positions of the actuator body 212 relative to housing 330 of the control device 310.

It can be seen that the control device 310 has an elongated shape in an axial direction of the control device 310. The axial direction of the control device 310 overlaps with the axial direction of the of the valve arrangement 250. The control device 310 is arranged to actuate the valve spindle 251 in an axial direction of the control device 310 when the control device 310 is attached to the valve arrangement 250.

Furthermore, the actuator body 212 is arranged to move in the axial direction of the control device 210 when the expandable material element 213 expands, when the control device 310 is attached to the valve arrangement 250, and when the valve spindle 251 is in the advanced end position. During such a scenario, the actuator body 212 moves further away from the valve arrangement 250 to compress the resilient member 215. This direction of the movement may be referred to as the actuator body 212 moving in a retracting direction. After the expandable material element 213 stops expanding and starts to compress, the actuator body 212 moves closer to the valve arrangement 250. This direction of the movement may be referred to as the actuator body 212 moving in an advancing direction.

The resilient member 215 is configured such that a force required to compress the resilient member 215 is less than a force required to overcome a resistance to shift the adjustment mechanism from a current setting to another setting when the motor 321 is not operated. In this way, unintentional shifting of the adjustment mechanism is avoided.

The resilient member 215 is configured such that the force required to compress the resilient member 215 is larger than a force required to overcome a resistance to actuate the valve spindle 251 when the expandable material element 213 expands, when the control device 310 is attached to the valve arrangement 250, when the valve spindle 251 is not in the advanced end position, and when the motor 321 is not operated. In this way, the resilient member 215 does not significantly degrade the level of control of the fluid flow through the valve arrangement 250 by the control device 310.

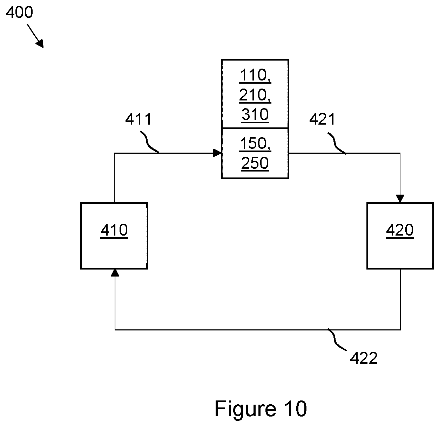

There is also disclosed herein a fluid distribution system 400 comprising a valve assembly according to the discussions above. Figure 10 shows a schematic illustration of an example fluid distribution system 400. The valve assembly comprises a control device 110, 210, 310 and a valve arrangement 150, 250. The fluid distribution system 400 of Figure 10 comprises a fluid source 410, such as a liquid tank, and fluid consumption point 420, such as a radiator. Relative to the valve assembly, upstream 411 is between the fluid source 410 and the valve assembly and downstream 421 is between the valve assembly and the consumption point 420. Fluid is recirculated from the fluid consumption point 420 to the fluid source 410 via a return path 422.

## Claims

1. A control device (110, 210, 310) for attaching to a valve arrangement (150, 250) such that a valve spindle (151, 251) of the valve arrangement (150, 250) is actuable by the control device (110, 210, 310), wherein the valve spindle (151, 251) is movable relative to a valve body (152, 252) of the valve arrangement (150, 250) for adjusting a fluid flow through the valve arrangement (150, 250), the control device (110, 210, 310) comprising a housing (130, 230, 330) encompassing
a thermal actuator (111, 211) configured to actuate the valve spindle (151, 251) in dependency of an ambient temperature around the control device (110, 210, 310) when the control device (110, 210, 310) is attached to the valve arrangement (150, 250), the thermal actuator (111, 211) comprising an actuator body (112, 212), an expandable material element (113, 213) expandable inside the actuator body (112, 212) in dependency of the ambient temperature, and an actuator piston (114, 214, 314) coupled to the expandable material element (113, 213) such that the actuator piston (114, 214, 314) moves away from the actuator body (112, 212) when the expandable material element (113, 213) expands, wherein the actuator piston (114, 214, 314) is configured to connect to the valve spindle (151, 251) when the control device (110, 210, 310) is attached to the valve arrangement (150, 250),
an adjustment mechanism (126; 231-233; 341-343) configurable in different settings, wherein each one of the different settings sets a respective distance (d1) that the expandable material element (113, 213) has to move the actuator piston (114, 214, 314) relative to the actuator body (112, 212) to position the valve spindle (151, 251) at a given position relative to the valve body (152, 252) when the control device (110, 210, 310) is attached to the valve arrangement (150, 250), and
wherein the control device (110, 210, 310) is provided with a motor (121, 221, 321) operatively connected to the adjustment mechanism (126; 231-233; 341-343), wherein the motor (121, 221, 321) is operable so as to cause the adjustment mechanism (126; 231-233; 341-343) to shift from a current setting to another setting,
and wherein the control device (110, 210, 310) is further provided with a resilient member (115, 215) arranged between the actuator body (112, 212) and the housing (130, 230, 330) of the control device (110, 210, 310), **characterized in that** the resilient member (115, 215) and actuator body (112, 212) are arranged such that when the control device (110, 210, 310) is attached to the valve arrangement (150, 250) and the valve spindle (151, 251) is in an advanced end position, the actuator body (112, 212) moves relative to the housing (130, 230, 330) of the control device (110, 210, 310) and compresses the resilient member (115, 215) when the expandable material element (113, 213) expands.

2. The control device (110, 210, 310) according to claim 1, wherein the resilient member (115, 215) comprises a spring member.

3. The control device (110, 210, 310) according to claim 1 or 2, wherein a first end of the resilient member (115, 215) is stationarily arranged with respect to the housing (130, 230, 330) of the control device (110, 210, 310), and a second end of the resilient member (115, 215) is stationarily arranged with respect to the actuator body (112, 212).

4. The control device (110, 210, 310) according to any previous claim, wherein the control device (110, 210, 310) is arranged to actuate the valve spindle (151, 251) in an axial direction of the control device (110, 210, 310) when the control device (110, 210, 310) is attached to the valve arrangement (150, 250), and wherein the actuator body (112, 212) is arranged to move in the axial direction of the control device (110, 210, 310) when the expandable material element (113, 213) expands, when the control device (110, 210, 310) is attached to the valve arrangement (150, 250), and when the valve spindle (151, 251) is in the advanced end position.

5. The control device (110, 210, 310) according to any previous claim, wherein the resilient member (115, 215) is configured such that a force required to compress the resilient member (115, 215) is less than a force required to overcome a resistance to shift the adjustment mechanism (126; 231-233; 341-343) from a current setting to another setting when the motor (121, 221, 321) is not operated.

6. The control device (110, 210, 310) according to any previous claim, wherein the resilient member (115, 215) is configured such that the force required to compress the resilient member (115, 215) is larger than a force required to overcome a resistance to actuate the valve spindle (151, 251) when the expandable material element (113, 213) expands, when the control device (110, 210, 310) is attached to the valve arrangement (150, 250), when the valve spindle (151, 251) is not in the advanced end position, and when the motor (121, 221, 321) is not operated.

7. The control device (210) according to any previous claim, wherein the adjustment mechanism (126; 231-233; 341-343) is configurable in its different settings by shifting a position of the actuator body (212) relative to the valve body (252) when the control device (210) is attached to the valve arrangement (250).

8. The control device (210) according to claim 7, wherein the housing (230) of the control device (210) comprises a first body part (231) configured to be rotationally locked to the valve body (252) when the control device (210) is attached to the valve arrangement (250), and wherein the control device (210) is provided with a second body part (232) rotatably attached to the first body part (231) around a first axis, wherein the actuator body (212) is attached to the second body part (232), and wherein the adjustment mechanism (231-233) is configured to shift the position the actuator body (212) relative to the valve body (252) by means of rotating the second body part (232) relative to the first body part (231) when the control device (210) is attached to the valve arrangement (250).

9. The control device (210) according to claim 8, wherein the control device (210) comprises an intermediate body part (233) rotatably attached to the first body part (231) around a second axis, and wherein the intermediate body part (233) and the second body part (232) are arranged to transfer rotational movement of the intermediate body part (233) to the second body part (232) such that the second body part (232) moves along the first axis relative to the first body part (231), and wherein the motor (221) is arranged to rotate the intermediate body part (233) when operated.

10. The control device (310) according to any of claims 1-6, wherein the adjustment mechanism (341-343) comprises an expandable part (341) configurable in different lengths, and wherein the expandable part (341) is arranged to connect the actuator piston (314) to the valve spindle (251) when the control device (310) is attached to the valve arrangement (250), and wherein the adjustment mechanism (341-343) is configurable in its different settings by means of configuring the expandable part (341) in its different lengths when the control device (310) is attached to the valve arrangement (250).

11. The control device (310) according to claim 10, wherein the expandable part (341) comprises a first component (342) and a second component (343), wherein the first component (342) is connected to the second component (343) by a threaded connection, wherein the expandable part (341) is configurable in its different lengths by means of rotating the first component (342) relative to the second component (343).

12. The control device (310) according to claim 11, wherein the motor (321) is arranged to rotate the first component (342) or the second component (343) when operated.

13. The control device (110, 210) according to any previous claim, wherein the adjustment mechanism (126; 231-233) constitutes first means of setting the distance (d1), and wherein the control device (110, 210) is provided with second means of setting the distance (d1).

14. The control device (210) according to claim 13 when dependent on claim 8 or 9, wherein the second means comprises a handle (234) arranged attached to the second body part (232), and wherein the handle (234) is configured to shift the position of the actuator body (212) relative to the valve body (252) by means of rotating the handle (234) relative to the first body part (231) when the control device (210) is attached to the valve arrangement (250) and when the motor (221) is not operated.

15. A valve assembly comprising the control device (110, 210, 310) according to any of claims 1-14 and the valve arrangement (150, 250).

## Patentansprüche

1. Steuervorrichtung (110, 210, 310) zur derartigen Befestigung an einer Ventilanordnung (150, 250), dass eine Ventilspindel (151, 251) der Ventilanordnung (150, 250) durch die Steuervorrichtung (110, 210, 310) betätigbar ist, wobei die Ventilspindel (151, 251) in Bezug auf einen Ventilkörper (152, 252) der Ventilanordnung (150, 250) zum Anpassen eines Fluidstroms durch die Ventilanordnung (150, 250) hindurch bewegbar ist, wobei die Steuervorrichtung (110, 210, 310) ein Gehäuse (130, 230, 330) umfasst, das Folgendes umschließt:
einen thermischen Betätiger (111, 211), der dazu konfiguriert ist, die Ventilspindel (151, 251) in Abhängigkeit von einer Umgebungstemperatur um die Steuervorrichtung (110, 210, 310) zu betätigen, wenn die Steuervorrichtung (110, 210, 310) an der Ventilanordnung (150, 250) befestigt ist, wobei der thermische Betätiger (111, 211) einen Betätigerkörper (112, 212), ein ausdehnbares Materialelement (113, 213), das innerhalb des Betätigerkörpers (112, 212) in Abhängigkeit von der Umgebungstemperatur ausdehnbar ist, und einen Betätigerkolben (114, 214, 314), der derart an das ausdehnbare Materialelement (113, 213) gekoppelt ist, dass sich der Betätigerkolben (114, 214, 314) von dem Betätigerkörper (112, 212) weg bewegt, wenn sich das ausdehnbare Materialelement (113, 213) ausdehnt, umfasst, wobei der Betätigerkolben (114, 214, 314) dazu konfiguriert ist, sich mit der Ventilspindel (151, 251) zu verbinden, wenn die Steuervorrichtung (110, 210, 310) an der Ventilanordnung (150, 250) befestigt ist,
einen Anpassungsmechanismus (126; 231-233; 341-343), der in unterschiedlichen Einstellungen konfigurierbar ist, wobei jede der unterschiedlichen Einstellungen eine jeweilige Distanz (d1) einstellt, über die das ausdehnbare Materialelement (113, 213) den Betätigerkolben (114, 214, 314) in Bezug auf den Betätigerkörper (112, 212) zu bewegen hat, um die Ventilspindel (151, 251) an einer gegebenen Position in Bezug auf den Ventilkörper (152, 252) zu positionieren, wenn die Steuervorrichtung (110, 210, 310) an der Ventilanordnung (150, 250) befestigt ist, und
wobei die Steuervorrichtung (110, 210, 310) mit einem Motor (121, 221, 321) versehen ist, der betriebswirksam mit dem Anpassungsmechanismus (126; 231-233; 341-343) verbunden ist, wobei der Motor (121, 221, 321) dazu betreibbar ist, den Anpassungsmechanismus (126; 231-233; 341-343) dazu zu veranlassen, sich von einer aktuellen Einstellung auf eine andere Einstellung umzustellen,
und wobei die Steuervorrichtung (110, 210, 310) ferner mit einem nachgiebigen Glied (115, 215) versehen ist, das zwischen dem Betätigerkörper (112, 212) und dem Gehäuse (130, 230, 330) der Steuervorrichtung (110, 210, 310) angeordnet ist, **dadurch gekennzeichnet, dass** das nachgiebige Glied (115, 215) und der Betätigerkörper (112, 212) derart angeordnet sind, dass, wenn die Steuervorrichtung (110, 210, 310) an der Ventilanordnung (150, 250) befestigt ist und sich die Ventilspindel (151, 251) in einer vorgeschobenen Endposition befindet, sich der Betätigerkörper (112, 212) in Bezug auf das Gehäuse (130, 230, 330) der Steuervorrichtung (110, 210, 310) bewegt und das nachgiebige Glied (115, 215) zusammendrückt, wenn sich das ausdehnbare Materialelement (113, 213) ausdehnt.

2. Steuervorrichtung (110, 210, 310) nach Anspruch 1, wobei das nachgiebige Glied (115, 215) ein Federglied umfasst.

3. Steuervorrichtung (110, 210, 310) nach Anspruch 1 oder 2, wobei ein erstes Ende des nachgiebigen Gliedes (115, 215) hinsichtlich des Gehäuses (130, 230, 330) der Steuervorrichtung (110, 210, 310) stationär angeordnet ist und ein zweites Ende des nachgiebigen Gliedes (115, 215) hinsichtlich des Betätigerkörpers (112, 212) stationär angeordnet ist.

4. Steuervorrichtung (110, 210, 310) nach einem der vorhergehenden Ansprüche, wobei die Steuervorrichtung (110, 210, 310) dazu angeordnet ist, die Ventilspindel (151, 251) in einer axialen Richtung der Steuervorrichtung (110, 210, 310) zu betätigen, wenn die Steuervorrichtung (110, 210, 310) an der Ventilanordnung (150, 250) befestigt ist, und wobei der Betätigerkörper (112, 212) dazu angeordnet ist, sich in der axialen Richtung der Steuervorrichtung (110, 210, 310) zu bewegen, wenn sich das ausdehnbare Materialelement (113, 213) ausdehnt, wenn die Steuervorrichtung (110, 210, 310) an der Ventilanordnung (150, 250) befestigt ist und wenn sich die Ventilspindel (151, 251) in der vorgeschobenen Endposition befindet.

5. Steuervorrichtung (110, 210, 310) nach einem der vorhergehenden Ansprüche, wobei das nachgiebige Glied (115, 215) derart konfiguriert ist, dass eine Kraft, die dazu erforderlich ist, das nachgiebige Glied (115, 215) zusammenzudrücken, kleiner als eine Kraft ist, die dazu erforderlich ist, einen Widerstand zu überwinden, um den Anpassungsmechanismus (126; 231-233; 341-343) von einer aktuellen Einstellung auf eine andere Einstellung umzustellen, wenn der Motor (121, 221, 321) nicht betrieben wird.

6. Steuervorrichtung (110, 210, 310) nach einem der vorhergehenden Ansprüche, wobei das nachgiebige Glied (115, 215) derart konfiguriert ist, dass die Kraft, die dazu erforderlich ist, das nachgiebige Glied (115, 215) zusammenzudrücken, größer als eine Kraft ist, die dazu erforderlich ist, einen Widerstand zu überwinden, um die Ventilspindel (151, 251) zu betätigen, wenn sich das ausdehnbare Materialelement (113, 213) ausdehnt, wenn die Steuervorrichtung (110, 210, 310) an der Ventilanordnung (150, 250) befestigt ist, wenn sich die Ventilspindel (151, 251) nicht in der vorgeschobenen Endposition befindet und wenn der Motor (121, 221, 321) nicht betrieben wird.

7. Steuervorrichtung (210) nach einem der vorhergehenden Ansprüche, wobei der Anpassungsmechanismus (126; 231-233; 341-343) in seinen unterschiedlichen Einstellungen durch Umstellen einer Position des Betätigerkörpers (212) in Bezug auf den Ventilkörper (252) konfigurierbar ist, wenn die Steuervorrichtung (210) an der Ventilanordnung (250) befestigt ist.

8. Steuervorrichtung (210) nach Anspruch 7, wobei das Gehäuse (230) der Steuervorrichtung (210) einen ersten Körperteil (231) umfasst, der dazu konfiguriert ist, mit dem Ventilkörper (252) drehverriegelt zu sein, wenn die Steuervorrichtung (210) an der Ventilanordnung (250) befestigt ist, und wobei die Steuervorrichtung (210) mit einem zweiten Körperteil (232) versehen ist, der um eine erste Achse an dem ersten Körperteil (231) drehbefestigt ist, wobei der Betätigerkörper (212) an dem zweiten Körperteil (232) befestigt ist und wobei der Anpassungsmechanismus (231-233) dazu konfiguriert ist, die Position Betätigerkörpers (212) mittels Drehens des zweiten Körperteils (232) in Bezug auf den ersten Körperteil (231) in Bezug auf den Ventilkörper (252) umzustellen, wenn die Steuervorrichtung (210) an der Ventilanordnung (250) befestigt ist.

9. Steuervorrichtung (210) nach Anspruch 8, wobei die Steuervorrichtung (210) einen Zwischenkörperteil (233) umfasst, der um eine zweite Achse drehbar an dem ersten Körperteil (231) befestigt ist, und wobei der Zwischenkörperteil (233) und der zweite Körperteil (232) dazu angeordnet sind, eine Drehbewegung des Zwischenkörperteils (233) derart auf den zweiten Körperteil (232) zu übertragen, dass sich der zweite Körperteil (232) entlang der ersten Achse in Bezug auf den ersten Körperteil (231) bewegt, und wobei der Motor (221) dazu angeordnet ist, den Zwischenkörperteil (233) zu drehen, wenn er betrieben wird.

10. Steuervorrichtung (310) nach einem der Ansprüche 1-6, wobei der Anpassungsmechanismus (341-343) einen ausdehnbaren Teil (341) umfasst, der in unterschiedlichen Längen konfigurierbar ist, und wobei der ausdehnbare Teil (341) dazu angeordnet ist, den Betätigerkolben (314) mit der Ventilspindel (251) zu verbinden, wenn die Steuervorrichtung (310) an der Ventilanordnung (250) befestigt ist, und wobei der Anpassungsmechanismus (341-343) in seinen unterschiedlichen Einstellungen mittels Konfigurierens des ausdehnbaren Teiles (341) in seinen unterschiedlichen Längen konfigurierbar ist, wenn die Steuervorrichtung (310) an der Ventilanordnung (250) befestigt ist.

11. Steuervorrichtung (310) nach Anspruch 10, wobei der ausdehnbare Teil (341) eine erste Komponente (342) und eine zweite Komponente (343) umfasst, wobei die erste Komponente (342) durch eine Gewindeverbindung mit der zweiten Komponente (343) verbunden ist, wobei der ausdehnbare Teil (341) in seinen unterschiedlichen Längen mittels Drehens der ersten Komponente (342) in Bezug auf die zweite Komponente (343) konfigurierbar ist.

12. Steuervorrichtung (310) nach Anspruch 11, wobei der Motor (321) dazu angeordnet ist, die erste Komponente (342) oder die zweite Komponente (343) zu drehen, wenn er betrieben wird.

13. Steuervorrichtung (110, 210) nach einem der vorhergehenden Ansprüche, wobei der Anpassungsmechanismus (126; 231-233) erste Mittel zum Einstellen der Distanz (d1) ausmacht und wobei die Steuervorrichtung (110, 210) mit zweiten Mitteln zum Einstellen der Distanz (d1) versehen ist.

14. Steuervorrichtung (210) nach Anspruch 13 in Abhängigkeit von Anspruch 8 oder 9, wobei die zweiten Mittel einen Griff (234) umfassen, der an dem zweiten Körperteil (232) befestigt angeordnet ist, und wobei der Griff (234) dazu konfiguriert ist, die Position des Betätigerkörpers (212) mittels Drehens des Griffes (234) in Bezug auf den ersten Körperteil (231) in Bezug auf den Ventilkörper (252) umzustellen, wenn die Steuervorrichtung (210) an der Ventilanordnung (250) befestigt ist und wenn der Motor (221) nicht betrieben wird.

15. Ventilbaugruppe, umfassend die Steuervorrichtung (110, 210, 310) nach einem der Ansprüche 1-14 und die Ventilanordnung (150, 250).

## Revendications

1. Dispositif de commande (110, 210, 310) à fixer à un agencement de soupape (150, 250) de telle sorte qu'une tige de soupape (151, 251) de l'agencement de soupape (150, 250) puisse être actionnée par le dispositif de commande (110, 210, 310), dans lequel la tige de soupape (151, 251) est mobile par rapport à un corps de soupape (152, 252) de l'agencement de soupape (150, 250) pour ajuster un écoulement de fluide à travers l'agencement de soupape (150, 250), le dispositif de commande (110, 210, 310) comprenant un boîtier (130, 230, 330) renfermant un actionneur thermique (111, 211) configuré pour actionner la tige de soupape (151, 251) en fonction d'une température ambiante autour du dispositif de commande (110, 210, 310) lorsque le dispositif de commande (110, 210, 310) est fixé à l'agencement de soupape (150, 250), l'actionneur thermique (111, 211) comprenant un corps d'actionneur (112, 212), un élément en matériau expansible (113, 213) pouvant se dilater à l'intérieur du corps d'actionneur (112, 212) en fonction de la température ambiante, et un piston d'actionneur (114, 214, 314) couplé à l'élément en matériau expansible (113, 213) de telle sorte que le piston d'actionneur (114, 214, 314) s'éloigne du corps d'actionneur (112, 212) lorsque l'élément en matériau expansible (113, 213) se dilate, dans lequel le piston d'actionneur (114, 214, 314) est configuré pour se raccorder à la tige de soupape (151, 251) lorsque le dispositif de commande (110, 210, 310) est fixé à l'agencement de soupape (150, 250),
un mécanisme d'ajustement (126 ; 231-233 ; 341-343) configurable selon différents réglages, dans lequel chacun des différents réglages définit une distance (d1) respective que l'élément en matériau expansible (113, 213) doit faire parcourir au piston d'actionneur (114, 214, 314) par rapport au corps d'actionneur (112, 212) pour positionner la tige de soupape (151, 251) à une position donnée par rapport au corps de soupape (152, 252) lorsque le dispositif de commande (110, 210, 310) est fixé à l'agencement de soupape (150, 250), et
dans lequel le dispositif de commande (110, 210, 310) est pourvu d'un moteur (121, 221, 321) relié de manière opérationnelle au mécanisme d'ajustement (126 ; 231-233 ; 341-343), dans lequel le moteur (121, 221, 321) peut être actionné de manière à amener le mécanisme d'ajustement (126 ; 231-233 ; 341-343) à passer d'un réglage actuel à un autre réglage,
et dans lequel le dispositif de commande (110, 210, 310) est en outre pourvu d'un élément élastique (115, 215) agencé entre le corps d'actionneur (112, 212) et le boîtier (130, 230, 330) du dispositif de commande (110, 210, 310), **caractérisé en ce que** l'élément élastique (115, 215) et le corps d'actionneur (112, 212) sont agencés de telle sorte que, lorsque le dispositif de commande (110, 210, 310) est fixé à l'agencement de soupape (150, 250) et que la tige de soupape (151, 251) est dans une position d'extrémité avancée, le corps d'actionneur (112, 212) se déplace par rapport au boîtier (130, 230, 330) du dispositif de commande (110, 210, 310) et comprime l'élément élastique (115, 215) lorsque l'élément en matériau expansible (113, 213) se dilate.

2. Dispositif de commande (110, 210, 310) selon la revendication 1, dans lequel l'élément élastique (115, 215) comprend un élément de ressort.

3. Dispositif de commande (110, 210, 310) selon la revendication 1 ou 2, dans lequel une première extrémité de l'élément élastique (115, 215) est agencée de manière stationnaire par rapport au boîtier (130, 230, 330) du dispositif de commande (110, 210, 310), et une seconde extrémité de l'élément élastique (115, 215) est agencée de manière stationnaire par rapport au corps d'actionneur (112, 212).

4. Dispositif de commande (110, 210, 310) selon l'une quelconque des revendications précédentes, dans lequel le dispositif de commande (110, 210, 310) est agencé pour actionner la tige de soupape (151, 251) dans une direction axiale du dispositif de commande (110, 210, 310) lorsque le dispositif de commande (110, 210, 310) est fixé à l'agencement de soupape (150, 250), et dans lequel le corps d'actionneur (112, 212) est agencé pour se déplacer dans la direction axiale du dispositif de commande (110, 210, 310) lorsque l'élément en matériau expansible (113, 213) se dilate, lorsque le dispositif de commande (110, 210, 310) est fixé à l'agencement de soupape (150, 250), et lorsque la tige de soupape (151, 251) est dans la position d'extrémité avancée.

5. Dispositif de commande (110, 210, 310) selon l'une quelconque des revendications précédentes, dans lequel l'élément élastique (115, 215) est configuré de telle sorte qu'une force requise pour comprimer l'élément élastique (115, 215) soit inférieure à une force requise pour surmonter une résistance au passage du mécanisme d'ajustement (126 ; 231-233 ; 341-343) d'un réglage actuel à un autre réglage lorsque le moteur (121, 221, 321) n'est pas actionné.

6. Dispositif de commande (110, 210, 310) selon l'une quelconque des revendications précédentes, dans lequel l'élément élastique (115, 215) est configuré de telle sorte que la force requise pour comprimer l'élément élastique (115, 215) soit supérieure à une force requise pour surmonter une résistance à l'actionnement de la tige de soupape (151, 251) lorsque l'élément en matériau expansible (113, 213) se dilate, lorsque le dispositif de commande (110, 210, 310) est fixé à l'agencement de soupape (150, 250), lorsque la tige de soupape (151, 251) n'est pas dans la position d'extrémité avancée, et lorsque le moteur (121, 221, 321) n'est pas actionné.

7. Dispositif de commande (210) selon l'une quelconque des revendications précédentes, dans lequel le mécanisme d'ajustement (126 ; 231-233 ; 341-343) est configurable selon ses différents réglages en déplaçant une position du corps d'actionneur (212) par rapport au corps de soupape (252) lorsque le dispositif de commande (210) est fixé à l'agencement de soupape (250) .

8. Dispositif de commande (210) selon la revendication 7, dans lequel le boîtier (230) du dispositif de commande (210) comprend une première partie de corps (231) configurée pour être verrouillée en rotation sur le corps de soupape (252) lorsque le dispositif de commande (210) est fixé à l'agencement de soupape (250), et dans lequel le dispositif de commande (210) est pourvu d'une seconde partie de corps (232) fixée de manière rotative à la première partie de corps (231) autour d'un premier axe, dans lequel le corps d'actionneur (212) est fixé à la seconde partie de corps (232), et dans lequel le mécanisme d'ajustement (231-233) est configuré pour déplacer la position du corps d'actionneur (212) par rapport au corps de soupape (252) au moyen d'une rotation de la seconde partie de corps (232) par rapport à la première partie de corps (231) lorsque le dispositif de commande (210) est fixé à l'agencement de soupape (250) .

9. Dispositif de commande (210) selon la revendication 8, dans lequel le dispositif de commande (210) comprend une partie de corps intermédiaire (233) fixée de manière rotative à la première partie de corps (231) autour d'un second axe, et dans lequel la partie de corps intermédiaire (233) et la seconde partie de corps (232) sont agencées pour transférer un mouvement de rotation de la partie de corps intermédiaire (233) à la seconde partie de corps (232) de telle sorte que la seconde partie de corps (232) se déplace le long du premier axe par rapport à la première partie de corps (231), et dans lequel le moteur (221) est agencé pour faire tourner la partie de corps intermédiaire (233) lorsqu'il est actionné.

10. Dispositif de commande (310) selon l'une quelconque des revendications 1 à 6, dans lequel le mécanisme d'ajustement (341-343) comprend une partie expansible (341) configurable selon différentes longueurs, et dans lequel la partie expansible (341) est agencée pour raccorder le piston d'actionneur (314) à la tige de soupape (251) lorsque le dispositif de commande (310) est fixé à l'agencement de soupape (250), et dans lequel le mécanisme d'ajustement (341-343) est configurable selon ses différents réglages au moyen d'une configuration de la partie expansible (341) selon ses différentes longueurs lorsque le dispositif de commande (310) est fixé à l'agencement de soupape (250).

11. Dispositif de commande (310) selon la revendication 10, dans lequel la partie expansible (341) comprend un premier composant (342) et un second composant (343), dans lequel le premier composant (342) est relié au second composant (343) par une liaison filetée, dans lequel la partie expansible (341) est configurable selon ses différentes longueurs au moyen d'une rotation du premier composant (342) par rapport au second composant (343).

12. Dispositif de commande (310) selon la revendication 11, dans lequel le moteur (321) est agencé pour faire tourner le premier composant (342) ou le second composant (343) lorsqu'il est actionné.

13. Dispositif de commande (110, 210) selon l'une quelconque des revendications précédentes, dans lequel le mécanisme d'ajustement (126 ; 231-233) constitue des premiers moyens de réglage de la distance (d1), et dans lequel le dispositif de commande (110, 210) est pourvu de seconds moyens de réglage de la distance (d1).

14. Dispositif de commande (210) selon la revendication 13 lorsqu'elle se rattache à la revendication 8 ou 9, dans lequel les seconds moyens comprennent une poignée (234) agencée de façon fixée à la seconde partie de corps (232), et dans lequel la poignée (234) est configurée pour déplacer la position du corps d'actionneur (212) par rapport au corps de soupape (252) au moyen d'une rotation de la poignée (234) par rapport à la première partie de corps (231) lorsque le dispositif de commande (210) est fixé à l'agencement de soupape (250) et lorsque le moteur (221) n'est pas actionné.

15. Ensemble soupape comprenant le dispositif de commande (110, 210, 310) selon l'une quelconque des revendications 1 à 14 et l'agencement de soupape (150, 250).
